# EUROPÄISCHE PATENTANMELDUNG

(11) **EP 0 555 636 A1**
(43) Veröffentlichungstag der Anmeldung: **18.08.1993**
(21) Anmeldenummer: 93100313.1
(22) Anmeldetag: 12.01.1993
(51) Int. Cl.: F22B 31/08, F23L 15/00

(54) **Verfahren zum Aufheizen der einem Dampferzeuger eines Kraftwerks zugeführten Verbrennungsluft**

(30) Priorität: 08.02.1992 DE 4203684
(71) Anmelder: Balcke-Dürr AG, D-40882 Ratingen (DE)
(72) Erfinder: Daschmann, Horst, W-4030 Ratingen 1 (DE)
(74) Vertreter: Stenger, Watzke & Ring Patentanwälte

(57) **Zusammenfassung**

Bei einem Verfahren zum Aufheizen der einem Dampferzeuger (1) eines Kraftwerks zugeführten Verbrennungsluft wird die Verbrennungsluft in einem Gegenstrom-Wärmetauscher (WT1) von den aus dem Dampferzeuger (1) austretenden heißen Rauchgasen aufgeheizt. Um ohne die Gefahr von Taupunktsunterschreitungen und bei unwesentlicher Veränderung der am Wärmeaustausch beteiligten Flächen des Wärmetauschers eine erhöhte rauchgasseitige Temperaturabsenkung zu ermöglichen, durchströmt die Verbrennungsluft vor Eintritt in den Gegenstrom-Wärmetauscher (WT1) einen Gleichstrom-Wärmetauscher (WT2) und wird dort von den aus dem Gegenstrom-Wärmetauscher (WT1) austretenden Rauchgasen vorgewärmt.

## Beschreibung

Die Erfindung betrifft ein Verfahren zum Aufheizen der einem Dampferzeuger eines Kraftwerks zugeführten Verbrennungsluft, bei dem die Verbrennungsluft in einem Gegenstrom-Wärmetauscher von den aus dem Dampferzeuger austretenden heißen Rauchgasen aufgeheizt wird.

Bei Dampferzeugern von Kraftwerken ist es bekannt, die zugeführte Verbrennungsluft auf eine Temperatur oberhalb 250° C aufzuwärmen und auf diese Weise den Wirkungsgrad des Dampferzeugers zu verbessern. Die Vorwärmung der Luft kann beispielsweise mittels einer elektrisch betriebenen Fremdbeheizung vorgenommen werden. Energetisch günstig ist es jedoch, die in den heißen Rauchgasen gespeicherte Wärmeenergie zur Erwarmung der Verbrennungsluft heranzuziehen. Hierzu ist es bereits bekannt, die Verbrennungsluft in einem Gegenstrom-Wärmetauscher von den aus dem Dampferzeuger austretenden, mindestens 350° C heißen Rauchgasen aufheizen zu lassen. Bei einem solchen Verfahren kann es an den am Wärmeaustausch beteiligten Flächen nahe des luftseitigen Eintritts bzw. rauchgasseitigen Austritts zu Taupunktsunterschreitungen durch Bildung korrosiv wirkenden Kondensates kommen, weshalb in der Praxis eine Rückführungsleitung vorgesehen ist, über die ein Teil der bereits aufgewärmten Verbrennungsluft wieder dem luftseitigen Eintritt des Gegenstrom-Wärmetauschers zugeführt wird. Auf diese Weise tritt die Verbrennungsluft nicht mit Umgebungstemperatur, sondern mit einer erhöhten Mischtemperatur in den Gegenstrom-Wärmetauscher ein, so daß in diesem kritischen Bereich der am Wärmeaustausch beteiligten Flächen des Wärmetauschers Taupunktsunterschreitungen vermieden werden.

Nachteilig bei diesem bekannten Verfahren ist, daß dieses keine großen rauchgasseitigen Temperaturabsenkungen gestattet. Zwar ließe sich durch eine Vergrößerung der am Wärmeaustausch beteiligten Flächen die rauchgasseitige Austrittstemperatur unter die üblichen Werte von 160° bis 180° C absenken, jedoch würde damit zugleich wiederum die Temperatur der am Wärmeaustausch beteiligten Flächen des Wärmetauschers absinken und sich damit die Gefahr von Taupunktsunterschreitungen durch Kondensation von Feuchtigkeitspartikeln erhöhen. Dem könnte durch einen erhöhten Anteil rückgeführter Verbrennungsluft und damit einer erhöhten Mischungstemperatur am luftseitigen Eintritt entgegengewirkt werden, jedoch würde dies zu einer Vergrößerung der erforderlichen Strömungsquerschnitte und damit des Bauvolumens des Wärmetauschers führen.

Der Erfindung liegt die **Aufgabe** zugrunde, ein Verfahren zum Aufheizen der einem Dampferzeuger eines Kraftwerks zugeführten Verbrennungsluft zu entwickeln, welches ohne die Gefahr von Taupunktsunterschreitungen und bei unwesentlicher Veränderung der am Wärmeaustausch beteiligten Flächen des Wärmetauschers eine erhöhte rauchgasseitige Temperaturabsenkung ermöglicht.

Zur **Lösung** dieser Aufgabenstellung wird vorgeschlagen, daß die Verbrennungsluft vor Eintritt in den Gegenstrom-Wärmetauscher einen Gleichstrom-Wärmetauscher durchströmt und dort von den aus dem Gegenstrom-Wärmetauscher austretenden Rauchgasen vorgewärmt wird.

Ein solches Verfahren ermöglicht eine im Vergleich zu dem bekannten Verfahren höhere rauchgasseitige Temperaturabsenkung. Diese erhöhte Temperaturabsenkung wird erreicht, obwohl die insgesamt am Wärmeaustausch beteiligten Flächen beider Wärmetauscher zusammen gleich oder sogar kleiner sind als bei dem bekannten, mit Luftrückführung arbeitenden Gegenstrom-Wärmetauscher. Zudem wird die verbesserte rauchgasseitige Temperaturabsenkung erreicht, ohne daß es an den kritischen Stellen des Wärmetauschers, insbesondere nahe dem luftseitigen Eintritt sowie dem rauchgasseitigen Austritt, zu Unterschreitungen der Taupunktstemperatur und damit unerwünschten Kondensationen kommen kann. Das erfindungsgemäße Verfahren ermöglicht es ferner, bei unverändertem Energieeinsatz die gewünschte Luftvorwärmung mit kleineren Wärmetauscherflächen und damit kompakter aufgebauten Wärmetauschereinheiten zu erreichen.

Vorzugsweise tritt die Verbrennungsluft mit Umgebungstemperatur in den Gleichstrom-Wärmetauscher ein. Eine Luftrückführung sowie die damit erforderlichen zusätzlichen Baukomponenten, wie Rückführkanal und Gebläse, wird auf diese Weise vermieden.

Mit einer Ausgestaltung des Verfahrens wird vorgeschlagen, daß die Gastemperatur des aus dem Dampferzeuger austretenden Rauchgases in der aus Gegenstrom- und Gleichstrom-Wärmetauscher zusammengesetzten Wärmetauschereinheit soweit abgekühlt wird, daß die mittlere Wandtemperatur der Wärmeaustauschflächen oberhalb des Taupunkts liegt.

Um eine besonders kompakte Bauweise der Wärmetauschereinheit zu ermöglichen und Wärmeverluste zu vermeiden, wird schließlich vorgeschlagen, daß die aus dem Gleichstrom-Wärmetauscher austretende Verbrennungsluft unmittelbar und ohne Zwischenleitungen in den Gegenstrom-Wärmetauscher gelangt.

Weitere Einzelheiten und Vorteile des Gegenstandes der Erfindung ergeben sich aus der nachfolgenden Beschreibung der zugehörigen Zeichnung, in der eine bevorzugte Ausführungsform des erfindungsgemäßen Verfahrens dargestellt ist. In der Zeichnung zeigen:
- Fig. 1: eine schematische Darstellung einer mit einem Gegenstrom-Wärmetauscher und einem Gleichstrom-Wärmetauscher arbeitenden Anlage zum Aufheizen der einem Dampferzeuger eines Kraftwerks zugeführten Verbrennungsluft;
- Fig. 2a: in einem als Beispiel dienenden Diagramm den rauchgasseitigen sowie den luftseitigen Temperaturverlauf in dem Gegenstrom-Wärmetauscher und
- Fig. 2b: in einem als Beispiel dienenden Diagramm den rauchgasseitigen sowie den luftseitigen Temperaturverlauf in dem Gleichstrom-Wärmetauscher.

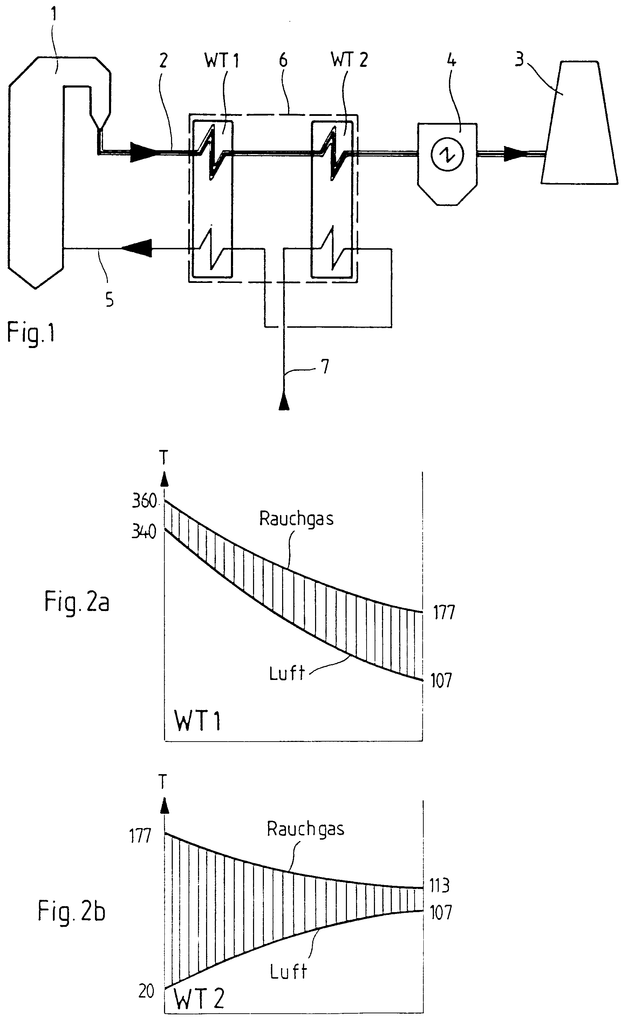

Die in Fig. 1 schematisch dargestellte Anlage besteht aus einem mittels fossiler Brennstoffe betriebenen Dampferzeuger 1, an den ein Rauchgaskanal 2 zur Ableitung der beim Verbrennungsprozeß entstehenden Rauchgase an einen Kamin 3 angeschlossen ist. Zur Reinigung des Rauchgases von den enthaltenen Feststoffpartikeln ist in den Rauchgaskanal 2 ein Filter 4 geschaltet.

Die für den Verbrennungsprozeß erforderliche Verbrennungsluft wird dem Dampferzeuger 1 in dessen unterem Bereich über einen Luftkanal 5 zugeführt.

Die in Fig. 1 dargestellte Anlage ist mit einer als Luftvorwärmer dienenden, aus zwei Wärmetauschern WT1, WT2 zusammengesetzten Wärmetauschereinheit 6 versehen.

Die über einen Frischluftkanal 7 aus der Umgebung zugeführte Verbrennungsluft gelangt zunächst in den als Gleichstrom-Wärmetauscher ausgebildeten Wärmetauscher WT2, wird dort von dem im Gleichstrom geführten Rauchgas aufgewärmt und gelangt anschließend in den als Gegenstrom-Wärmetauscher ausgebildeten Wärmetauscher WT1. In dem Gegenstrom-Wärmetauscher WT1 wird die bereits vorgewärmte Verbrennungsluft von den aus dem Dampferzeuger 1 austretenden, heißen Rauchgasen im Gegenstrom bis auf die für den Eintritt in den Dampferzeuger 1 gewünschte Endtemperatur aufgewärmt.

In den Fig. 2a und 2b sind Beispiele bevorzugter Temperaturverläufe in den beiden Wärmetauschern WT1,WT2 der Wärmetauschereinheit 6 dargestellt. In dem Gegenstrom-Wärmetauscher WT1 wird das etwa 360° C heiße Rauchgas des Dampferzeugers 1 unter gleichzeitiger Erwärmung der Verbrennungsluft bis auf 177° C abgekühlt. Hierbei steigt die Temperatur der im Gegenstrom geführten Verbrennungsluft von 107° C auf 340° C. Das in solcher Weise abgekühlte Rauchgas gelangt anschließend in den Gleichstrom-Wärmetauscher WT2, wo eine weitere Abkühlung bis auf 113° C stattfindet. Die hierbei im Gleichstrom geführte Verbrennungsluft wird von einer Eintrittstemperatur von 20° C auf eine Austrittstemperatur von 107° C erwärmt. Diese Austrittstemperatur ist zugleich Eintrittstemperatur der Luft in dem luftseitig nachgeschalteten Gegenstrom-Wärmetauscher WT1.

Bei dem genannten Ausführungsbeispiel ergibt sich bei einem Rauchgasvolumenstrom von 515 000 m³/h sowie einem Luftvolumenstrom von 438 000 m³/h eine Temperatur an den kritischen Stellen der am Wärmeaustausch beteiligten Flächen des Gleichstrom-Wärmetauschers WT2 von mindestens 110° C. Bei einer solchen Blechtemperatur werden Unterschreitungen der Taupunktsgrenze, die etwa bei einer Temperatur von 70° bis 80° C liegt, vermieden. Die in der Verbrennungsluft bzw. dem Rauchgas enthaltenen Anteile an Wasser bzw. schwefliger Säure können daher nicht an den am Wärmeaustausch beteiligten Flächen, d.h. Blechen, der regenerativ oder rekuperativ arbeitenden Wärmetauschereinheit 6 kondensieren und damit zu der gefürchteten Korrosion führen.

### Bezugszeichenliste:

- 1: Dampferzeuger
- 2: Rauchgaskanal
- 3: Kamin
- 4: Filter
- 5: Luftkanal
- 6: Wärmetauschereinheit
- 7: Frischluftkanal
- WT1: Gegenstrom-Wärmetauscher
- WT2: Gleichstrom-Wärmetauscher

## Patentansprüche

1. Verfahren zum Aufheizen der einem Dampferzeuger eines Kraftwerks zugeführten Verbrennungsluft, bei dem die Verbrennungsluft in einem Gegenstrom-Wärmetauscher von den aus dem Dampferzeuger austretenden heißen Rauchgasen aufgeheizt wird,
**dadurch gekennzeichnet,**
daß die Verbrennungsluft vor Eintritt in den Gegenstrom-Wärmetauscher (WT1) einen Gleichstrom-Wärmetauscher (WT2) durchströmt und dort von den aus dem Gegenstrom-Wärmetauscher (WT1) austretenden Rauchgasen vorgewärmt wird.

2. Verfahren nach Anspruch 1, dadurch gekennzeichnet, daß die Verbrennungsluft mit Umgebungstemperatur in den Gleichstrom-Wärmetauscher (WT2) eintritt.

3. Verfahren nach Anspruch 1 oder Anspruch 2, dadurch gekennzeichnet, daß die Gastemperatur des aus dem Dampferzeuger (1) austretenden Rauchgases in der aus Gegenstrom- (WT1) und Gleichstrom-Wärmetauscher (WT2) zusammengesetzten Wärmetauschereinheit (6) soweit abgekühlt wird, daß die mittlere Wandtemperatur der Wärmeaustauschflächen oberhalb des Taupunkts liegt.

4. Verfahren nach Anspruch 1, dadurch gekennzeichnet, daß die aus dem Gleichstrom-Wärmetauscher (WT1) austretende Verbrennungsluft unmittelbar und ohne Zwischenleitungen in den Gegenstrom-Wärmetauscher (WT1) gelangt.
